Europäisches Patentamt

European Patent Office

Office européen des brevets

(19)

(11) **EP 1 538 532 A1**

(12) **EUROPEAN PATENT APPLICATION**
published in accordance with Art. 158(3) EPC

(43) Date of publication:
**08.06.2005 Bulletin 2005/23**

(51) Int Cl.⁷: **G06F 17/14**, H03M 7/30

(21) Application number: **03761831.1**

(86) International application number:
**PCT/JP2003/008222**

(22) Date of filing: **27.06.2003**

(87) International publication number:
**WO 2004/003785 (08.01.2004 Gazette 2004/02)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **28.06.2002 JP 2002189382**

(71) Applicant: **Nokia Corporation
02150 Espoo (FI)**

(72) Inventor: **GOTO, Hisashi
Kawasaki-shi, Kanagawa 213-0025 (JP)**

(74) Representative: **Vollnhals, Aurel
Tiedtke-Bühling-Kinne & Partner (GbR),
TBK-Patent,
Bavariaring 4
80336 München (DE)**

(54) **DCT PROCESSOR FOR EXECUTING DISCRETE COSINE TRANSFORM (DCT)**

(57)    Based on a given DCT algorithm developed before, a processing memory of a special structure is used to facilitate resource sharing. Accordingly, it is intended to reductions in the number of members required, function block areas, and power consumption, and further intended to accelerate processing speed, and reduce output latency. This apparatus is a DCT processor used for implementing discrete cosine transform, including: a storage and processing module for permutating data; and a computing module for computing data in accordance with a given DCT algorithm, wherein data is looped at a given number of times between the storage and processing module and the computing module, and a result of discrete cosine transform is obtained based on data read out of output units of the computing module.

FIG.1

**Description**

Technical Field

The present invention relates to a DCT processor used for implementing discrete cosine transform (hereinafter, 'DCT').

Background of the Invention

The discrete cosine transform is a transform that transforms data expressed as values along the time sequence into data split into frequency components. DCT algorithms which achieve discrete cosine transform are widely used for image processing, frequency subband filters and the like, typified by MPEG and MP3.
A DCT processor for implementing the DCT algorithm generally requires many adder-subtracters and multipliers, and enormous numbers of crossbar switches and the like. The number of members required is suddenly increased as sampling points are increased. Its main cause is complexity of data permutations (replacement).
Apparently, an increase in members grows the function block area of the DCT processor as well as power consumption caused by peripheral logic connections, and also expands the maximum connection length of peripheral logics. Furthermore, it decreases the processing speed of the processor to result in prolonged output latency.
For example, as a typical example of the traditional DCT algorithm, there is an algorithm called Lee's algorithm. In order to implement the discrete cosine transform at 32 sampling points with the DCT processor for implementing Lee's algorithm, at least 273 adder-subtractors, 80 multipliers and enormous numbers of crossbar switches are required. In reality, it is very difficult to directly arrange these enormous numbers of resources on an LSI entirely, and output latency caused by these enormous numbers of members results in a serious problem.
The most excellent DCT processor among known DCT processors today is considered to be Multi Fraction Processing Unit developed by Lippen P. E. R et al. with Lee's algorithm. However, even this processor requires a large number of members due to complexity of permutations, which hardly solves the above problem yet.

Disclosure of the Invention

The invention is to solve the traditional problem described above, which facilitates resource sharing with a processing memory of a special structure that is developed based on a given DCT algorithm produced before and focusing on attention of the regularity of data flows in this DCT algorithm, and therefore intends reductions in the number of members required, function block areas, and power consumption, and further intends accelerated processing speed, or reduced output latency.
In order to achieve the object, the invention is characterized by a DCT processor used for implementing discrete cosine transform including: a storage processor for permutating data; and a computing device for computing in accordance with a given DCT algorithm, wherein data is looped at a given number of times between the storage processor and the computing device, and a result of discrete cosine transform is determined based on data read out of the computing device.
Furthermore, the invention is characterized by a DCT processor used for implementing discrete cosine transform including: the storage processor having a plurality of input units and a plurality of the output units, the storage processor for permutating a plurality of items of data inputted through the plurality of the input units and then outputting the data from the plurality of the output units; a computing device having a plurality of input units connected to the output units of the storage processor and a plurality of output units, the computing device for computing data inputted from the plurality of the input units in accordance with a given DCT algorithm and outputting the data from the plurality of the output units; a storage device having a plurality of input units connected to the output units of the computing device and a plurality of output units connected to the input units of the storage processor, the storage device for storing a plurality of items of data outputted from the output units of the computing device and outputting the data from the plurality of the output units; and a sorting module disposed between the storage device and the storage processor, the sorting module for sorting data from the storage device in a given order, wherein the plurality of items of data outputted from the output units of the storage device is looped at a given number of times by the storage processor, the computing device, the storage device, and the sorting module in this order, and a result of discrete cosine transform is determined based on the data read out of the output unit of the storage device.
Moreover, the invention is characterized by a 32-point DCT processor for performing discrete cosine transform with respect to 32 items of data obtained by being sampled at 32 sampling points including: a storage processor having eight input units and eight output units, the storage processor for allowing eight items of data to be inputted and outputted each at one time, at four times in total, thus a total of 32 items of data, and the storage processor for outputting a total of 32 items of data that has been sequentially written at given storage locations eight items each at one time, at four times in total, to the eight output units in a given order through the eight input units; two computing devices, each having four input units connected to four output units among the eight output units of the storage processor and four output units, two computing devices for computing data inputted from the eight input units by four items of data each at one time in accordance with a CGA-DCT algorithm and outputting the data from the four output units; a storage device having eight input units connected to the eight output units in total of the two computing devices and eight output units connected to the eight input units in total of the storage processor, the storage device allowing eight items of data to be written in and read out each at one time, at four times in total, thus a total of 32 items of data by first-in, first-out, and the storage device for storing eight items of data in total outputted from the individual output units of the computing device at four times in total, thus a total of 32 items of data; and a sorting module disposed between the storage device and the storage processor, the sorting module for sorting data from the storage device in a given order.

It is acceptable that the DCT processor further includes an input module for inputting data from outside into the DCT processor which is disposed right before the storage processor, between the storage processor and the computing device, or between the computing device and the storage device.

In the DCT processor, it is acceptable that the storage processor operates in one of a first operating mode that association between the data to be inputted and the data to be outputted is not changed when the data is written in the given storage location, and a second operating mode that association between the data to be inputted and the data to be outputted is changed, and data from the input module is processed in the first operating mode.

In the DCT processor, it is acceptable that a total of 32 items of data having been processed by the storage processor operating in the first operating mode is sequentially processed by the computing device and the storage device, after that, a total of 32 items of data read out of the output units of the storage device is processed by the sorting module, the data is then looped by the storage processor, the computing device, the storage device, and the sorting module operating in the second operating mode in this order, and a result of the data having undergone discrete cosine transform is determined based on the data read out of the output units of the storage device at the fourth loop.

In the DCT processor, it is acceptable that the storage processor has a total of 32 storage locations, and the 32 items of data are written in and read out of any one of 32 storage locations one by one.

In the DCT processor, it is acceptable that a write line and a read line are disposed at each of the 32 storage locations, wherein the write line and the read line are vertically connected to each other, and are not shared in data write and readout.

In the DCT processor, it is acceptable that the given sort is done by crossing transmission lines between the storage device and the storage processor.

In the DCT processor, it is acceptable that a sorting device is used for outputting a total of 32 items of data to the eight output units in a given order.

In the DCT processor, it is acceptable that the storage processor is an 8R/W memory circuit, the computing device is a DCT circuit, and the storage device is a FIFO.

In the DCT processor, it is acceptable that the sorting module is disposed on the storage processor.

Furthermore, the invention is characterized by a storage processor used for a DCT processor used for implementing discrete cosine transform, the storage processor including: looping data at a given number of times with a computing device for computing in accordance with a given DCT algorithm; and permutating data so as to determine a result of discrete cosine transform based on data read out of the computing device.

Moreover, the invention is characterized by a storage processor used for a DCT processor used for implementing discrete cosine transform, the storage processor including: a plurality of input units; and a plurality of output units, wherein a plurality of items of data inputted through the plurality of the input units is permutated and is outputted from the plurality of the output units, wherein the DCT processor further comprises: a computing device having a plurality of input units connected to the output units of the storage processor and a plurality of the output units, the computing device for computing data inputted from the plurality of the input units in accordance with a given DCT algorithm and outputting the data from the plurality of the output units; a storage device having a plurality of input units connected to the output units of the computing device and a plurality of output units connected to the input units of the storage processor, the storage device for storing a plurality of items of data outputted from the output units of the computing device and outputting the data from the plurality of the output units; and a sorting module disposed between the storage device and the storage processor, the sorting module for sorting data from the storage device in a given order, wherein a plurality of items of data outputted from the storage device is looped at a given number of times by the storage processor, the computing device, the storage device, and the sorting module in this order, and a result of discrete cosine transform is determined based on data read out of the output units of the storage device.

Furthermore, the invention is characterized by a storage processor used for a 32-point DCT processor for performing discrete cosine transform with respect to 32 items of data obtained by being sampled at 32 sampling points, the storage processor including: eight input units; and eight output units, wherein the storage processor allows eight items of data to be inputted and outputted each at one time at four times in total, thus a total of 32 items of data, and sequentially outputs a total of 32 items of data that has been sequentially written at given storage locations eight items each at one time, at four times in total, to the eight output units in a given order through the eight input units, wherein the DCT processor further comprises: two computing devices, each having four input units connected to four output units among the eight output units of the storage processor and four output units, the computing devices for computing data inputted from the eight input units by four items of data each at one time in accordance with a CGA-DCT algorithm and outputting the data from the four output units; a storage device having eight input units connected to the eight output units in total of the two computing devices and eight output units connected to the eight input units in total of the storage processor, the storage device allowing eight items of data to be written in and read out each at one time, at four times in total, thus a total of 32 items of data by first-in, first-out, and the storage device for storing eight items of data in total outputted from the individual output units of the computing device at four times in total, thus a total of 32 items of data; and a sorting module disposed between the storage device and the storage processor, the sorting module for sorting data from the storage device in a given order.

Brief Description of the Drawings

Fig. 1 is a block diagram illustrating a DCT processor according to the invention;
Fig. 2 is diagrams for describing the individual functions of a DCT circuit;
Fig. 3 is a block diagram illustrating an 8R/W memory circuit;
Fig. 4 is a circuit diagram of the 8R/W memory circuit;
Fig. 5 is a diagram visually illustrating the effect by implementing permutations;
Fig. 6 is a diagram illustrating a sequence flow of a discrete cosine transform process; and
Fig. 7 is a data flow graph showing data flows of data generated by the discrete cosine transform process.

Best Mode for Carrying out the Invention

A. First Embodiment

1. The configuration of a DCT processor

1-1. Overall configuration

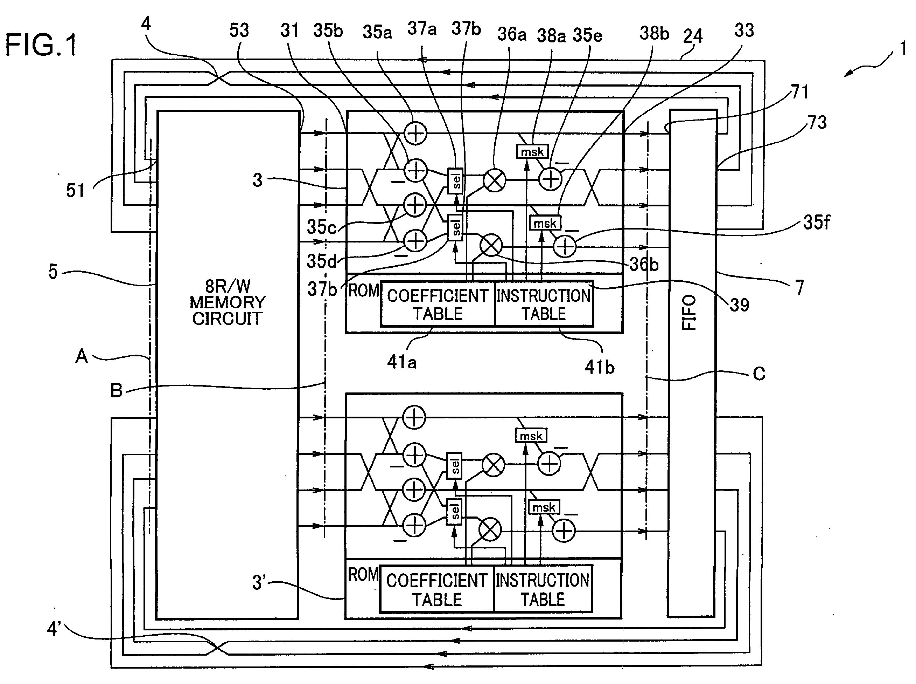

Fig. 1 shows a block diagram illustrating a DCT processor 1 of a first embodiment according to the invention.
Particularly, this DCT processor 1 is a 32-point DCT processor (hereinafter, 'DCT processor') 1, which can performs discrete cosine transform for 32 items of sampling data obtained by being sampled at 32 sampling points. Furthermore, designers freely determine how many bits sampling data has, for example, one word (16 bits).
The DCT processor 1 is configured of two circuits (hereinafter, 'DCT circuit,') 3, 3' which are arranged in parallel and can perform computation necessary for discrete cosine transform in accordance with a given DCT algorithm, an eight read/write port SRAM memory circuit (hereinafter, '8R/W memory circuit') 5 (corresponding to a 'storage processor' in claims) which is developed focusing attention on the data flow regularity in the algorithm used in the DCT circuits, and an 8 word × 4 depth FIFO (first-in, first-out buffer (hereinafter, 'FIFO') (corresponding to a 'storage device' in claims) 7.
In addition, it can be considered that the DCT circuit 3 and the DCT circuit 3' are completely the same. The algorithm used in these DCT circuits 3, 3' is Constant Geometry algorithm for DCT (CGA-DCT)) [4] (hereinafter, 'CGA-DCT algorithm') particularly here, proposed by Jakko Altola, David Akopian et al. in 1999 and 2000.
As apparent from Fig. 1, the 8R/W memory circuit 5, the DCT circuits 3, 3', and the FIFO are connected to each other in loops. Furthermore, eight output units 53 of the 8R/W memory circuit 5 are connected to eight input units 31 of the DCT circuits 3, 3', eight output units 33 of the DCT circuits 3, 3' are connected to eight input units 71 of the FIFO 7, and eight output units 73 of the FIFO 7 are connected to eight input units of the 8R/W memory circuit 5. Consequently, data can be looped among them in this order at a desired number of times. In other words, the same process can be repeated for data at a desired number of times.
Moreover, arrows in the drawing indicate the directions of data flows. As apparent from the drawing, particularly when data is transmitted from the FIFO 7 to the 8R/W memory circuit 5, a part of data is sorted (changed) by cross units (corresponding to a 'sorting module' in claims) 4, 4', more specifically, by crossing transmission lines arranged therebetween at two points. This sort allows permutations, which will be described later.

1-2. DCT circuit

<Overview>

The DCT circuits 3, 3' are configured of six adder-subtractors 35a to f, two multipliers 36a, 36b, two selectors (sel) 37a, 37b, two masks (msk) 38a, 38b, and one ROM 39. The input units 31 and the output units 33 are provided for the DCT circuits 3, 3' four each, respectively. Therefore, the DCT circuits 3, 3' can input and output four items of data each at one time. Four items of data inputted from the input units 31 of each of the DCT circuits 3, 3' are computed in accordance with the CGA-DCT algorithm, and then outputted from the output units 33 as four items of data.

The configuration of the DCT circuits 3, 3' is the same as that described in a paper, *Architecture-oriented regular algorithms for discrete sine and cosince transforms,* IEEE Trans. Signal Processing Vol.47. pp. 1109-1124, April in 1999 by Jarmo Astola, David Akopian et al. Hereinafter, the configuration thereof will be described briefly. See the paper above for the detail.

<The configuration of functional devices>

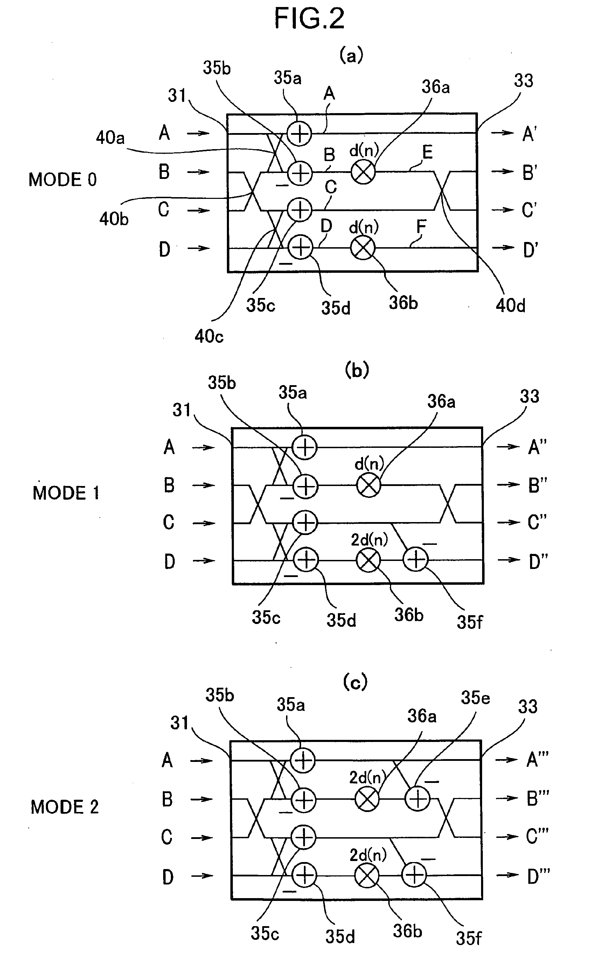

In each of the DCT circuits 3, 3' shown in Fig. 1, it can be considered that the individual functions of functional devices in modes 0 to 2 shown in Figs. 2a) to 2c) are realized by a single circuit. Then, before describing the DCT circuits in Fig. 1, the individual functions of the functional devices shown in Fig. 2 will be first described.

As apparent from Fig. 2, the functional devices in mode 0 are configured of four adder-subtractors 35a to e and two multipliers 36a, 36b. The functional devices in mode 1 further include a single adder-subtractor 35f in addition to these members, and the functional devices in mode 2 further include a single adder-subtractor 35f as well. As apparent from these, the numbers of the adder-subtractors and the multipliers provided for the functional devices in mode 2 are the same as those of the DCT circuits 3, 3' shown in Fig. 1, but the functional devices in mode 2 are not provided with the selectors 37a, 37b, the masks 38a, 38b, and the ROMS 9 as are included in the DCT circuits 3, 3' shown in Fig. 1. This is because these members are members that are mainly used only for selecting modes.

Furthermore, among the adder-subtractors provided for the individual functional devices in mode 0 to mode 2, 35b, 35d, 35f with symbol (-) function as subtractors, and 35a, 35c, 35e with no symbol function as adders. Moreover, symbol d(n) or symbol 2d(n) (it means that $2 \times d(n)$) denoted above each of the multipliers of the individual functional devices indicates a coefficient used in multiplication that is determined by the value n. More specifically, the coefficient is calculated by an equation (hereinafter, 'Equation 1') formed of three types of equations below.

$$(1)\ d(1) = \sqrt{(0.5)}$$

$$(2)\ d(2i) = \sqrt{(0.5(1 + d(i))}$$

$$(3)\ d(2i + 1) = \sqrt{(0.5(1 - d(i))}$$

(Where, i = 1/2, 2/2, 3/2, ... n/2 (n is a integer).)

In Equation 1) above, when n = 2, for example, Equation (2) is used and the coefficient used in multiplication is $d(2) = \sqrt{(0.5\ (1 + d(1))} = \sqrt{(0.5\ (1 + \sqrt{(0.5)})}$. In addition, the value n is predetermined, which will be described later.

<The operation of the functional devices>

The operation of the functional devices shown in Fig. 2a) is as follows.

Suppose the values of data A to D are inputted to four input units 31 of the functional devices, the adder-subtractor 35a adds data A to data C that has been transmitted through a cross unit 40a and a cross unit 40b at location A, and thus A + C is obtained. In the meantime, at location B, the adder-subtractor 35b subtracts data C that has been transmitted through the cross unit 40a from data A that has been transmitted through the cross unit 40b, and thus A - C is obtained.

Similarly, at location C, the adder-subtractor 35c adds data B that has been transmitted though the cross unit 40a to data D that has been transmitted through the cross unit 40c, and thus B + D is obtained. In the meantime, at location D, the adder-subtractor 35d subtracts D from data B that has been transmitted through the cross unit 40a and the cross unit 40c, and thus B - D is obtained.

Furthermore, the multiplier 36a multiplies A - C obtained at location B by the coefficient d(n) in accordance with the value n, and then the cross unit 40d changes the output location. Moreover, the multiplier 36b multiplies B - D obtained at location D by the coefficient d(n).

Accordingly, by the functional devices in mode 0, the results of A + C, B + D, (A - C) × d(n), and (B - D) × d (n) are obtained at four outputs A' to D', respectively. Similarly, by the functional devices in mode 1, the results of A + C, B + D, (A - C) × d(n), and (B - D) × 2d (n) - (B + D) are obtained at individual outputs A" to D". By the functional devices in mode 2, the results of A + C, B + D, (A - C) × 2d(n) - (A + C), and (B - D) × 2d (n) - (B + D) are obtained at individual outputs A''' to D'''.

<The configuration of the DCT circuit>

The DCT circuits 3, 3' can realize the functional devices in modes 1 to 3 described above with a single circuit by using two selectors 37a, 37b, two masks 38a, 38b, and one ROM 39.

Here, the selectors 37a, 37b are for selecting any one of the two adder-subtractors 35b, 35d connected thereto. Furthermore, the mask 38a is for sending and not sending signals to the adder-subtractor 35e connected thereto, and the mask 38b is for sending and not sending signals to the adder-subtractor 35f connected thereto.

The ROM 39 is for storing information required for controlling the selectors 37a, 37b and the masks 38a, 38b. These items of information are stored in two tables, that is, in a coefficient table 41a and an instruction table 41b. Here, the coefficient table 41a is for storingEquation 1) described above. The individual multipliers obtain the value n to be used, and then uses with the coefficient table 41a to calculate the coefficient. On the other hand, the instruction table 41b is for storing the selector or the mask to be selected in accordance with the mode to be selected. The DCT circuits 3, 3' know to select which selectors 37a, 37b or masks 38a, 38b are selected in accordance with each mode based on information of the instruction table 41b.

The instruction table 41b will be further described. For example, when operating as the functional devices in mode 1, a processing unit (not shown) of the DCT circuits 3, 3' instruct the selectors 37a, 37b based on information of the instruction table 41b so that the selector 37a selects the adder-subtractor 35b from the adder-subtractors 35b, 35d, and the selector 37b selects the adder-subtractor 35d from the adder-subtractors 35b, 35d. Furthermore, the processing unit (not shown) of the DCT circuits 3, 3' instruct the mask 38a not to send signals from the adder-subtractor 35a to the adder-subtractor 35e connected thereto, and the mask 38b not to send signals from the adder-subtractor 35c to the adder-subtractor 35f connected thereto.

Similarly, when operating as the functional devices in mode 2, the DCT circuits 3, 3' instruct the selector 37a, the selector 37b, and the mask 38a to function as similar to in mode 1, and instruct the mask 38b to send signals from the adder-subtractor 35c to the adder-subtractor 35f connected thereto.

Similarly, when operating as the functional devices in mode 3, the DCT circuits 3, 3' instruct the selector 37a to select the adder-subtractor 35d from the adder-subtractors 35b, 35d, and the selector 37b to select the adder-subtractor 35b from the adder-subtractors 35b, 35d. Moreover, the DCT circuits 3, 3' instruct the mask 38a to send signals from the adder-subtractor 35a to the adder-subtractor 35e connected thereto, and the mask 38b to send signals from the adder-subtractor 35c to the adder-subtractor 35f connected thereto.

By the functions above, the DCT circuits 3, 3' shown in Fig. 1 can realize all the individual functions of the functional devices in modes 1 to 3 shown in Fig. 2.

1-3. The configuration of the FIFO

The FIFO 7 is the same as FIFOs generally used, and is a storage device that can write and read out data by first-in, first-out. Among these FIFOs, the FIFO 7 of 8 x 4 depth is particularly used here. That is, the FIFO 7 can write and read out eight items of data at one time, which can write eight items of data at four times in succession, 32 items in total, and readout four times in succession, 32 items in total. Apparently, this FIFO 7 can store a total of 32 items of data at one time.

The purpose of providing the FIFO 7 is to temporarily store data, that is, data is delayed to allow processing by the 8R/W memory circuit 5 that operates relatively slow. Therefore, it can be considered that the FIFO 7 is not necessarily required when technical advances will accelerate the operation of the 8R/W memory circuit 5.

1-4. The configuration of the 8R/W memory circuit

<Overview>

The 8R/W memory circuit 5 is a memory that has been specially developed for the DCT processor 1 according to the invention. However, the 8R/W memory circuit 5 does not simply functions as a storage device. The main purpose is to perform processes required for implementing discrete cosine transform, that is, to perform permutations.

Briefly, it can be said that the configuration of the 8R/W memory circuit is to share various members (resources) traditionally used to reduce the number of the members, in other words, to facilitate resource sharing. In the invention, the 8R/W memory circuit is used to significantly reduce the number of members required for a processor, for example, the numbers of the adder-subtractors, the multipliers, and the crossbar switches.

Data to be inputted and outputted from the 8R/W memory circuit 5 at one time is eight items as similar to the FIFO 7, which can write (input) eight items of data at four times in succession, 32 items in total, and can output data at four times in succession, 32 items in total. Furthermore, data to be stored in (the memory of) the 8R/W memory circuit 5 at one time is 32 items in total.

<Details>

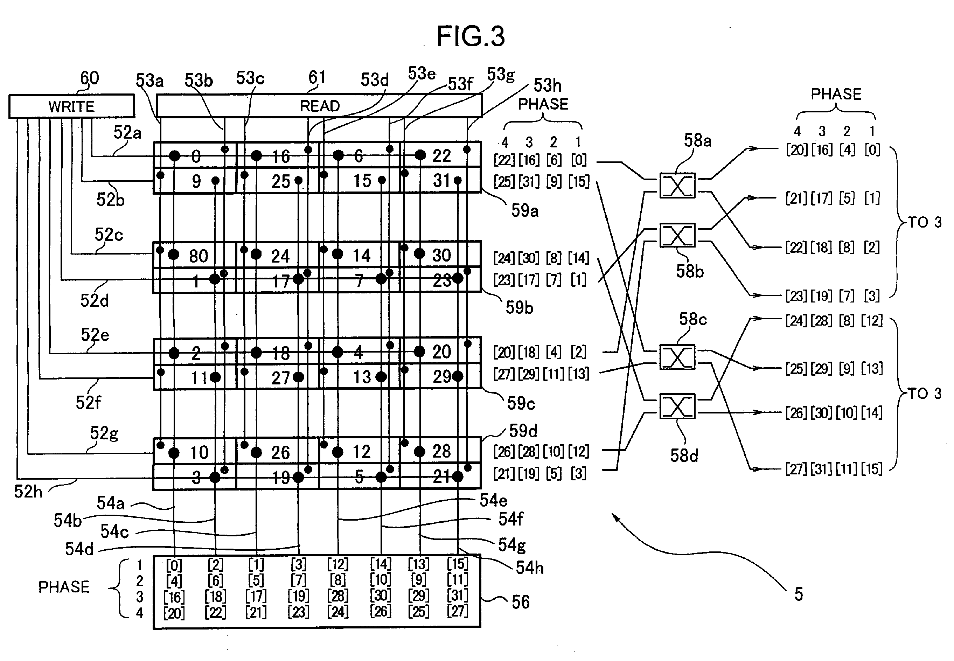

With reference to Fig. 3, the configuration of the 8R/W memory circuit 5 will be described in detail. This drawing shows a block diagram illustrating the 8R/W memory circuit 5.

The 8R/W memory circuit 5 according to the invention has 32 of memory blocks 0 to 31 (corresponding to 'storage locations' in claims), eight write lines 52a to h for writing data in the individual memory blocks 0 to 31, eight read lines 53a to h for reading data out of the individual memory blocks 0 to 31, eight transmission lines 54a to h for transmitting data to the individual memory blocks 0 to 31, and four crossbar switches 58a to d (corresponding to a 'sorting device' in claims). The write lines 52a to h and the read lines 53a to h are connected to a write enable unit and to a read enable unit, respectively.

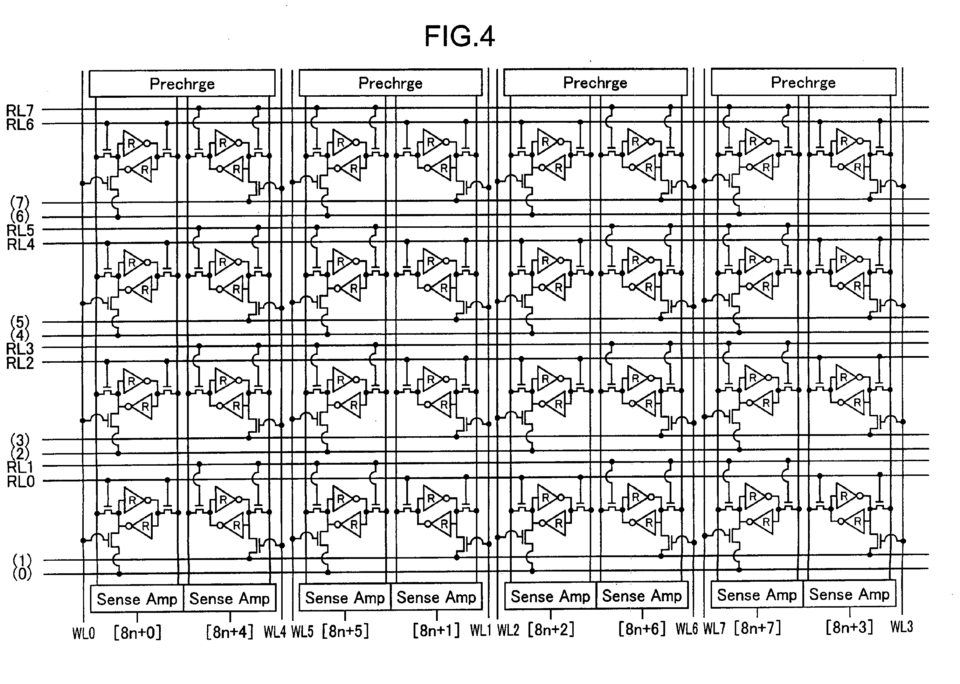

For reference, Fig. 4 depicts an actual circuit diagram of the 8R/W memory circuit 5. However, the crossbar switches 58a to d are not shown in this drawing. In the drawing, WLs 0 to 7 correspond to the write lines 52a to h, RLs 0 to 7 correspond to the read lines 53a to h, and (0) to (7) correspond to the transmission lines 54a to h.

<Memory block>

One item of data can be written in and read out of the individual memory blocks 0 to 31. The individual memory blocks 0 to 31 are distinguished by numerals 0 to 31. It can be said that these numerals indicate storage locations at which data is stored.

These memory blocks 0 to 31 are split into four block groups 59a to d. Since there are 32 memory blocks in total, each of the block groups 59a to d includes eight (32/4 = 8) memory blocks. For example, the block group 59a includes the memory blocks 0, 16, 6, 22, 8, 24, 14, 30.

<Transmission lines, write lines, and read lines>

The transmission lines 54a to h are arranged in a given direction (in the vertical direction in the drawing) so that eight lines are allocated to each of the block groups 59a to d and one line is allocated to each of the memory blocks 0 to 31. Data outputted from the FIFO 7 and the like are transmitted through the transmission lines 54a to h.

The write lines 52 are arranged so that two lines are allocated to each of the block groups 59, eight lines in total, and one line is allocated to each of the memory blocks 0 to 31. Each of the write lines 52 intersects four memory blocks of eight memory blocks among the individual block groups 59 in the orthogonal direction of the transmission lines 54a to h. The write lines 52 are enabled for two lines at one time by the operation of the write enable unit 60. When signals exist on the data transmission lines 54 and the write lines 52 are enabled, data is written in any memory blocks at the intersecting locations. Each of the write lines intersects four memory blocks and two write lines are enabled at one time, and thus eight items of data in total are written in any memory blocks at one write.

The read lines 53a to h are arranged so that eight lines are arranged to each of the block groups 59a to d in the same direction of the data transmission lines 54a to h. Each of the individual read lines 53a to h intersects eight memory blocks (two blocks for one of the block groups 59a to d), but one block is actually used in each of the block groups 59a to d at one readout operation, and thus only four memory blocks in total. The read lines 53a to h are enabled by the operation of the read enable unit 61 for two lines at one time as similar to the write lines 52. Each of the read lines 53 is actually operated for four memory blocks at one readout operation, and two write lines are enabled at one time. Thus, eight items of data in total are read out of any memory blocks at one readout.

As apparent from the description above, in the 8R/W memory circuit 5 according to the invention, lines are not shared in write and readout, and the write lines 52 and the read lines 53 are arranged to each other in the vertical direction. With this configuration, the crossbar switches 58a to d that are considered to be required in a large number for discrete cosine transform can be reduced to only four.

<Crossbar switch>

The crossbar switches 58a to d are used for properly sorting data having been read out of the individual memory blocks 0 to 31 before outputting it from the 8R/W memory circuit 5. For example, eight items of data read out by enabling the read line 53a and the read line 53e, that is, eight items of data [0], [15], [14], [1], [2], [13], [12, [3] read out in a first phase are sequentially sorted in order of [0], [1], [2], [3], [12], [13], [14], [15] by the crossbar switches 58a to d. In addition, throughout the above description, the specification and the drawings, [n] (n is an integer from 0 to 31) indicates the contents (the value) of data stored at the memory location n in the storing modules such as the memory blocks 0 to 31.

<Readout of the memory blocks of the 8R/W memory circuit and output from the 8R/W memory circuit>

Readout of the memory blocks of the 8R/W memory circuit and output from the 8R/W memory circuit are done by the following procedures.

In the first phase, that is, in the first readout, the read line 53b and the read line 53e are enabled to read out [0], [1], [2], [3], and [15], [14], [13], [12], respectively. These items of data are sequentially sorted in order of [0], [1], [2], [3], [12], [13], [14], [15] by the crossbar switches 58, and then outputted from the 8R/W memory circuit 5.

In a second phase, that is, in the second readout, the read line 53a and the read line 53f are enabled to read out [6], [7], [4], [5], and [9], [8], [11], [10], respectively. These items of data are sequentially sorted in order of [4], [5], [6], [7], [8], [9], [10], [11] by the crossbar switches 58, and then outputted from the 8R/W memory circuit 5.

In a third phase, that is, in the third read out, the read line 53d and the read line g are enabled to read out [16], [17], [18], [19], and [31], [30], [29], [28], respectively. These items of data are sequentially sorted in order of [16], [17], [18], [19], [28], [29], [30], [31] by the crossbar switches 58, and then outputted from the 8R/W memory circuit 5.

In a fourth phase, that is, in the fourth readout, the read line 53c and the read line 53h are enabled to read out [22], [23], [20], [21], and [25], [24], [27], [26], respectively. These items of data are sequentially sorted in order of [20], [21], [22], [23], [24], [25], [26], [27] by the crossbar switches 58, and then outputted from the 8R/W memory circuit 5.

As apparent from above, data is temporarily stored in the 8R/W memory circuit 5, and thus the data can be outputted in a given order. Furthermore, the order of data to be outputted from the 8R/W memory circuit 5 can be controlled based on the fact that data is to be stored in any of the memory blocks 0 to 31 of the 8R/W memory circuit 5.

<Data write in the memory blocks of the 8R/Wmemory circuit and permutations>

There are two ways to write data in the memory blocks 0 to 31 of the 8R/W memory circuit 5: for example, the case where data is written from a CPU and the like (not shown) outside the DCT processor, and the case where data is written inside the DCT processor in loops through the FIFO 7 and the like.

In order to perform write in the former, in addition to eight signal lines 24 shown in Fig. 1, it can be considered there is further a module for inputting data from outside the DCT processor into the DCT processor, for example, there are signal lines (not shown) for transmitting data from outside the DCT processor to the input units 51 of the 8R/W memory circuit 5. These signal lines are enough to be electrically connected to the input units 51 of the 8R/W memory circuit 5 between the cross units 4, 4' (and the FIFO 5) and the 8R/W memory circuit 5. They are fine to be directly connected to the input units 51 of the 8R/W memory circuit, or indirectly connected in the midway of the signal lines 24, through a selecting module such as the selector disposed right before the input units 51 of the 8R/W memory circuit (the intersecting locations of chain line A and the signal lines 24). The selecting module is connected to both of the signal lines for external data and the signal lines 24 in loops, and selects only one system of signal lines. When the selecting module is used, a conflict between the signal lines for external data and the signal lines 24 can be prevented effectively.

The operation of the 8R/W memory circuit is varied depending on processing data from outside the DCT processor, that is, data from the input module and processing data from inside the DCT processor. For convenience, in the specification, the former operation of the 8R/W memory circuit is called a 'first operating mode' (corresponding to a 'first operating mode' in claims), and the latter operation of the 8R/W memory circuit is called a 'second operating mode' (corresponding to a 'second operating mode' in claims) for distinction. Here, in the first operatingmode, data is written in the 8R/W memory circuit except data from the DCT processor (from the FIFO), and then the data is outputted, whereas in the second operating mode, data from the DCT processor (the FIFO) is written in the 8R/W memory circuit, and then the data is outputted. In addition, when the selecting module described above is used, the selecting module is properly switched so that in the first operating mode, the signal lines for external data are selected to transmit data from the CPU and the like to the 8R/W memory circuit, whereas in the second operating mode, the signal lines 24 are selected to transmit data from the FIFO to the 8R/W memory circuit.

In the first operating mode, data comes from the input module (not shown), and thus data is written in the 8R/W memory circuit not through the cross units 4, 4' (see Fig. 1) and without changing data association. On the other hand, in the second operating mode, data comes from the FIFO 5, and thus data is sorted by the cross units 4, 4' and then stored in the 8R/W memory with data association changed. Consequently, in the second operating mode, data outputted from the 8R/W memory circuit is permutated.

For further description, in the first operating mode, the data write locations follow the numerals 0 to 31 assigned to the individual memory blocks 0 to 31. More specifically, data [0] is located at the memory blocks 0, [1] is located at the memory block 1, [2] is located at the memory block 2, and so on. Consequently, in the first operating mode, data read out in the first phase results in data [0], [1], [2], [3], [12], [13], [14], [15], each corresponding to [0], [1], [2], [3], [12], [13], [14], [15] before written. Date read out in the second phase results in [4], [5], [6], [7], [8], [9], [10], [11], each corresponding to [4], [5], [6], [7], [8], [9], [10], [11] before written. Furthermore, data read out in the third phase results in data [16], [17], [18], [19], [28], [29], [30], [31], each corresponding to [16], [17], [18], [19], [28], [29], [30], [31] before written. Moreover, data readout in the fourth phase results in data [20], [21], [22], [23], [24], [25], [26], [27], each corresponding to [20], [21], [22], [23], [24], [25], [26], [27] before written. Accordingly, in the first operating mode, the order of data to be read out is merely controlled.

On the other hand, in the second operating mode, data is sorted by the cross units 4, 4' (see Fig. 1) disposed between the FIFO and the 8R/W memory circuit, and then written in the 8R/W memory with data association changed. Consequently, the data write locations do not necessarily follow the numerals 0 to 31 assigned to the individual memory blocks. Accordingly, in the second operating mode, data association is changed, that is, data is permutated, and then the order of data to be read out is controlled.

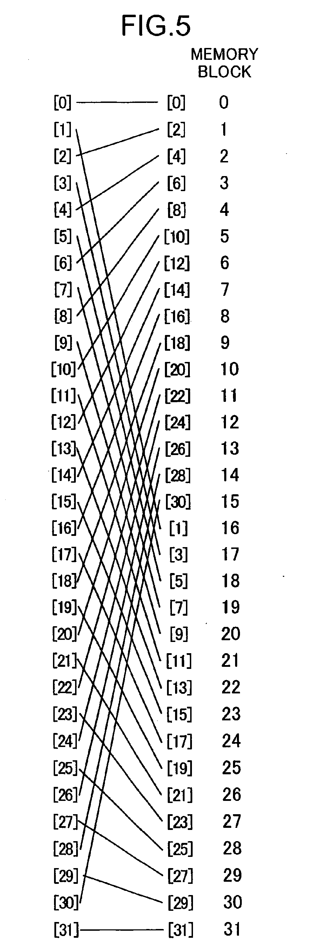

Fig. 5 visually depicts the effect obtained by implementing permutations. In this drawing, the numerals without [] are the numerals 0 to 31 of the memory blocks. As apparent from the drawing, for example, original data [0] to [31] shown on the left is permutated and then associated with [0], [2], [1], [6], [8], [10] and so on shown on the right. Furthermore, [0], [2], [4], [6], [8], [10] and so on before permutated result in data in the memory blocks 0, 1, 2, 3 and so on, that is, [0], [1], [2], [3] and so on after permutated.

The detail will be further described with reference to Fig. 3. Data [0], [1], [2], [3], [12], [13], [14], [15] in the first phase before permutated are first sorted by the cross units 4, 4' in order of [0], [2], [1], [3], [12], [14], [13], [15] (see 56 in Fig. 3). After that, the write lines 52a, 52d are enabled, and the data is written in the memory blocks 0, 1, 16, 17, and 6, 7, 22, 23. Therefore, the data is read out of the memory blocks as [0], [1], [16], [17], [6], [7], [22], [2]. More specifically, the data is permutated to associate originally [0], [1], [2], [3], [12], [13], [14], [15] with [0], [16], [1], [17], [6], [22], [7], [23], respectively.

Similarly, data [4], [5], [6], [7], [8], [9], [10], [11] in the second phase before permutated are first sorted by the cross units 4, 4' in order of [4], [6], [5], [7], [8], [10], [9], [11] (see 56 Fig. 3). After that, the write line 52e, 52h are enabled, and the data is written in the memory blocks 2, 3, 18, 19, and 4, 5, 20, 21. Therefore, the data is read out of the memory blocks as [2], [3], [18], [19], [4], [5], [20], [21]. More specifically, the data is permutated to associate originally [4], [5], [6], [7], [8], [9], [10], [11] with [2], [18], [3], [19], [5], [4], [20], [21], respectively.

Furthermore, [16], [1], [18], [19], [28], [29], [30], [31] in the third phase before permutated are first sorted by the cross units 4, 4' in order of [16], [18], [17], [19], [28], [30], [29], [31] (see 56 Fig. 3). After that, the write line 52b, 52c are enabled, and the data is written in the memory blocks 8, 9, 24, 25, and 14, 15, 30, 31. Therefore, the data is read out of the memory blocks as [8], [9], [24], [25], [14], [15], [30], [31]. More specifically, the data is permutated to associate originally [16], [17], [18], [19], [28], [29], [30], [31] with [8], [24], [9], [25], [14], [30], [15], [31], respectively.

Moreover, [20], [21], [22], [23], [24], [25], [26], [27] in the fourth phase before permutated are first sorted by the cross units 4, 4' in order of [20], [22], [21], [23], [24], [26], [25], [27] (see 56 Fig. 3). After that, the write lines 52g, 52h are enabled, and the data is written in the memory blocks 10, 11, 26, 27, 12, 13, 28, 29. Therefore, the data is read out of the memory blocks as [10], [11], [26], [27], [12], [13], [28], [29]. More specifically, the data is permutatedto associate originally [20], [21], [22], [23], [24], [25], [26], [27] with [10], [26], [11], [27], [12], [28], [13], [29], respectively.

2. The operation of the DCT processor

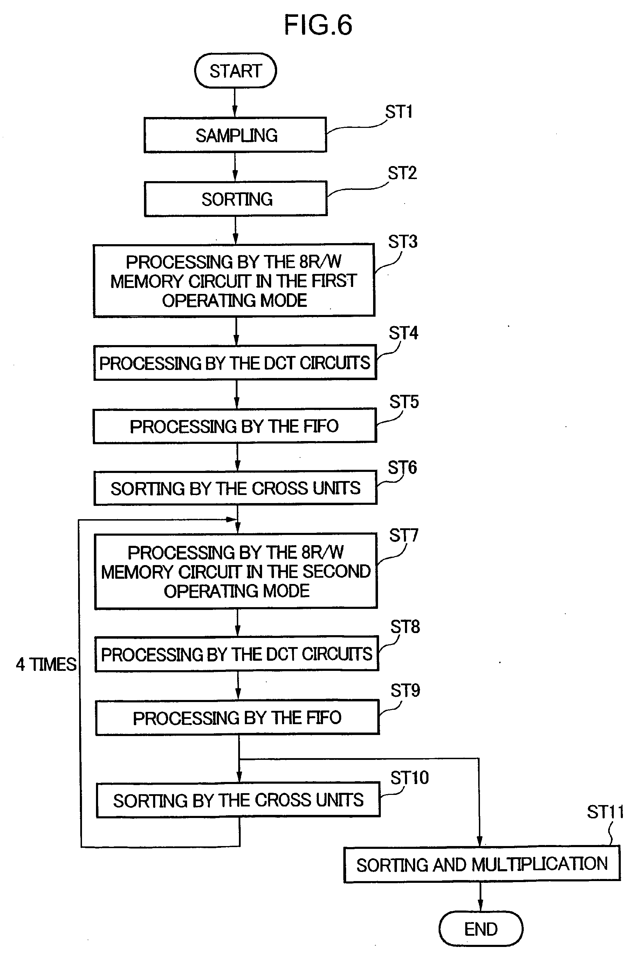

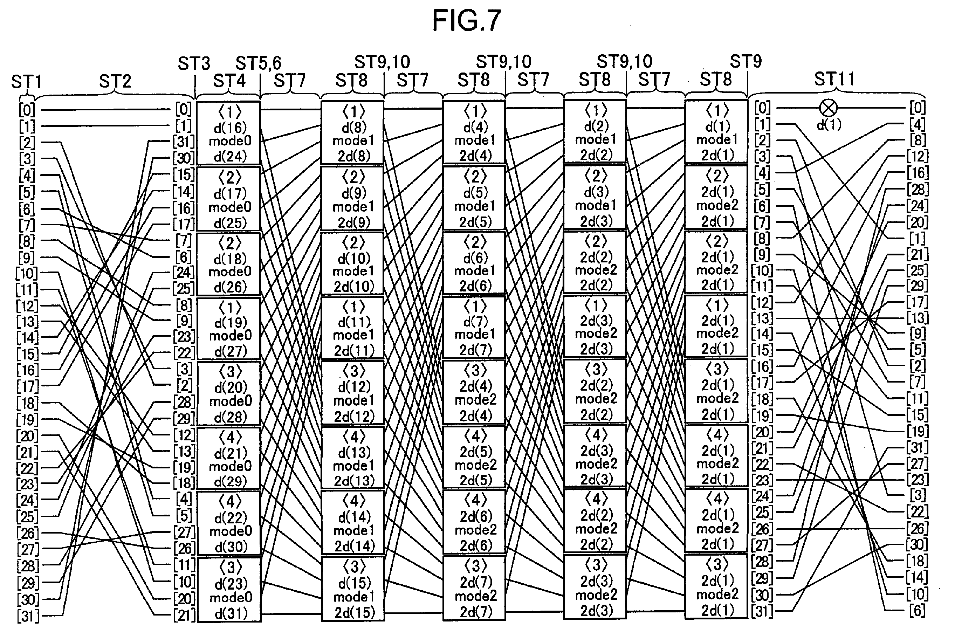

Fig. 6 shows a sequence flow of a discrete cosine transform process done by the DCT processor 1 according to the invention and its peripheral devices (not shown), and Fig. 7 shows a data flow graph depicting data flows of data generated by this process. In addition, the numerals of steps (ST) shown in the upper part of Fig. 7 correspond to those in Fig. 6, respectively.

Furthermore, the process done by the DCT processor 1 according to the invention is only steps 3 to 10 among steps 1 to 11 shown in Fig. 6. The remaining steps 1, 2, and 11 are to be done by peripheral devices such as the CPU and the like. In other words, in order to obtain the final result of discrete cosine transform, the peripheral devices for performing the processes for steps 1, 2, and 11 are required in addition to the process done by the DCT processor 1 according to the invention. However, it is acceptable that the DCT processor 1 according to the invention performs these processes by design modification.

At step 1, data to undergo discrete cosine transform is first sampled at 32 sampling points to obtain 32 items of sampling data [0] to [31].

At step 2, the sampling data is sorted in the order shown in Fig. 7. This sort is a process required for properly performing the later processes. This sort allows data to be sorted in order of [0], [1], [31], [30] and so on.

Subsequently, at step 3, the data is written in and read out of the memory blocks 0 to 31 of the 8R/W memory circuit 5 that operates in the first operating mode. Moreover, the write here is done by the CPU and the like, for example, not by the FIFO 5 (see Fig. 1), and thus there is no sort done by the cross units 4, 4'. Furthermore, in this case, each of items of data is written in the memory blocks with the numerals corresponding to [0], [1], [31], [30] and so on. More specifically, [0] is written in the memory block 0, [1] iswritten in the memory block 1, and [31] is written in the memory block 31, and so on. With these writes and readouts, as described with reference to Fig. 3, data outputted from the 8R/W memory circuit 5 results in [0], [1], [2], [3], [12], [13], [14], [15] in the first phase, results in [4], [5], [6], [7], [8], [9], [10], [11] in the second phase, results in [16], [17], [18], [19], [28], [29], [30], [31] in the third phase, and results in [20], [21], [22], [23], [24], [25], [26], [27] in the fourth phase, without changing association.

Then at step 4, the data is processed by the two DCT circuits 3, 3' (see Fig. 1) (ST4). As apparent from Fig. 1, since eight output units of the 8R/W memory circuit 5 are correspondingly connected to four input units of the two DCT circuits 3, 3', [0], [1], [2], [3] in the data read out in the first phase by the 8R/W memory circuit 5 are processed by the DCT circuit 3, whereas [12], [13], [14], [15] are processed by the DCT circuit 3'. Similarly, [4], [5], [6], [7] in the data read out in the second phase are processed by the DCT circuit 3, whereas [8], [9], [10], [11] are processed by the DCT circuit 3'. Furthermore, [16], [17], [18], [19] in the data read out in the third phase are processed by the DCT circuit 3, whereas [28], [29], [30], [31] are processed by the DCT circuit 3'. Moreover, [20], [21], [22], [23] in the data read out in the fourth phase are processed by the DCT circuit 3, whereas [24], [25], [26], [27] are processed by the DCT circuit 3'.

In addition, in Fig. 7, in order to clear data to be processed by the DCT circuits 3, 3', the data area processed by a single circuit of the DCT circuits 3, 3' is surrounded by a square. As apparent from the description above, four items of data are processed in each square.

Here, <n> (n is an integer from 1 to 4) in each square means that the data is processed in the phases 1 to 4. For example, there are two squares with <1>, meaning that they are processed in the first phase. Furthermore, data to be processed in the squares is [0] to [4] or [12] to [15], meaning that they are processed by the DCT circuit 3 and the DCT circuit 3', respectively. Similarly, two squares with <2> are meant to be processed in the second phase, and data to be processed at that time is [4] to [7] or [8] to [11], meaning that they are processed by the DCT circuit 3 and the DCT circuit 3', respectively. Moreover, two squares with <3> are meant to be processed in the third phase, and data to be processed is [16] to [19] or [27] to [31], meaning that they are processed by the DCT circuit 3 and the DCT circuit 3', respectively. Similarly, there are two squares with <4> as well that are meant to be processed in the fourth phase, and data to be processed at that time is [20] to [23] or [24] to [27], meaning that they are processed by the DCT circuit 3 and the DCT circuit 3', respectively.

Furthermore, mode n (n is an integer from 0 to 2) in each square indicates the mode used by the individual DCT circuits 3, 3'. Also, d(n) (n is an integer from 1 to 31) indicates a coefficient for multiplication used by the multipliers 36a, 36b of the individual DCT circuits 3, 3' (see Fig. 1). For example, in the first phase, the DCT circuit 3 functions as the functional device (see Fig. 2a)) in mode 0, the multiplier 36a of the functional device in mode 0 uses the coefficient d(16), and the multiplier 36b uses the coefficient d(24). In the meantime, similarly in the first phase, the DCT circuit 3' functions as the functional device in mode 0 (see Fig. 2a)), the multiplier 36a of the functional device in mode 0 uses the coefficient d(19), and the multiplier 36b uses the coefficient d(27).

After that, at step 5, eight items of data having been processed by the individual DCT circuits 3, 3' are sequentially written in the FIFO 7 (see Fig. 1), all the 32 items of data are written, and then again sequentially read out. The data read out at this time corresponds to [0], [1], [2], [3], [12], [13], [14], [15] in the first phase, [4], [5], [6], [7], [8], [9], [10], [11] in the second phase, [16], [17], [18], [19], [28], [29], [30], [31] in the third phase, and [20], [21], [22], [23], [24], [25], [26], [27] in the fourth phase.

Subsequently, at step 6, data is sorted by the cross units 4, 4' (see Fig. 1). This sort allows the data from the FIFO to be in order shown in 56 in Fig. 3. More specifically, data in the first phase is [0], [2], [1], [3], [12], [14], [13], [15], data in the second phase is [4], [6], [5], [7], [8], [10], [9], [11], data in the third phase is [16], [18], [17], [19], [28], [30], [29], [31], and data in the fourth phase is [20], [22], [21], [23], [24], [26], [25], [27].

Then at step 7, the data read out of the FIFO 7 is returned to the 8R/W memory circuit 5 (Fig. 1) that operates in the second operating mode (for the circuit operation, it is looped), and written in and read out. Consequently, permutations are done to associate data in the first phase [0], [1], [2], [3], [12], [13], [14], [15] with [0], [16], [1], [17], [6], [22], [7], [23], respectively, data in the second phase [4], [5], [6], [7], [8], [9], [10], [11] with [2], [18], [3], [19], [5], [4], [20], [21], respectively, data in the third phase [16], [17], [18], [19], [28], [29], [30], [31] with [8], [24], [9], [25], [14], [30], [15], [31], respectively, and data in the fourth phase [20], [21], [22], [23], [24], [25], [26], [27] with [10], [26], [11], [27], [12], [28], [13], [29], respectively.

Subsequently, at step 8, the data having been permutated is again processed by the DCT circuits 3, 3'. This process is the same as that described at step 4.

Then, at step 9, the data from the DCT circuits 3, 3' is again processed by the FIFO 7. This process is the same as that described at step 5.

Subsequently, at step 10, sorts are again done by the cross units 4, 4' (see Fig. 1). This process is the same as that described at step 6.

After that, the processes from step 7 to step 10 are further repeated at three times (for the circuit operation, 'looped'). Consequently, the processes from steps 7 to 10 are repeated at four times in total (however, as apparent from the description below and Fig. 6, it is acceptable that the process at step 10 at the fourth loop can be omitted because it is irrelevant to the final result).

Finally, at step 11, the data obtained after the process at step 9 when the fourth loop is finished, that is, the data from the FIFO 7 (see Fig. 1) is sorted in order of [0], [4], [8], [12] and so on, and data [0] is multiplied by the coefficient d(1) (that is, $\sqrt{(0.5)}$). These processes are the processes that are required for obtaining the final result in a desired form.

## B. Second Embodiment

Again reference to Fig. 1, a second embodiment according to the invention will be described. The second embodiment is in which an input module (not shown) for inputting data from outside into the DCT processor is disposed between the 8R/W memory circuit 5 and the DCT circuits 3, 3' (at the intersecting locations of chain line B and the signal lines 24).

Consequently, in the second embodiment, in contrast to the first embodiment, data from outside the DCT processor is directly given to the DCT circuits 3, 3', not through the 8R/W memory circuit 5. However, also in this case, data given to the DCT circuits 3, 3' is the same as data through the 8R/W memory circuit 5, furthermore, it needs to be the same as the data processed by the 8R/W memory circuit in the first operating mode. On this account, in the second embodiment, data is considered to be processed by a CPU and the like beforehand.

Apparently, in the second embodiment, the 8R/W memory circuit 5 does not need to operate for processing in the first operating mode. Stated differently, in the second embodiment, it is fine to operate the 8R/W memory circuit 5 only in the second operating mode described above. Therefore, according to the second embodiment, the processes done by the CPU and the like are increased more or less than those in the first embodiment, but it is fine to operate the 8R/W memory 5 in a single operating mode (the second operation mode), and thus the control and the configuration of the 8R/W memory circuit can be more simplified. On the contrary, in the first embodiment, the control and the configuration of the 8R/W memory circuit 5 become complicated more or less than those in the second embodiment, but it is advantageous in that the processes done by the CPU and the like can be reduced.

## C. Third Embodiment

A third embodiment according to the invention includes those in which an input module is disposed between the DCT circuits 3, 3' and the FIFO 7 (at the intersecting locations of chain line C and the signal lines 24).

Consequently, in the third embodiment, data from outside the DCT processor is directly given to the FIFO 7, not through the 8R/W memory circuit 5 or the DCT circuits 3, 3'. However, also in this case, data given to the FIFO 5 needs to be the same as data through the 8R/W memory circuit 5 or the DCT circuits 3, 3', furthermore, as the data processed by the 8R/W memory circuit and the DCT circuit 3, 3' in the first operating mode. This process can be done by a CPU and the like.

Apparently, also in the third embodiment, the 8R/W memory circuit 5 does not need to operate for processing in the first operating mode, similar to the second embodiment. Therefore, the third embodiment has the same advantages and disadvantages as those described in the second embodiment.

## D. The performance of the DCT processor

A table below shows the comparison result that the performance of the DCT processor according to the invention is compared with that of the DCT processor by Lippen et al.

| | DCT processor according to the invention | Processor by Lippen et al. |
|---|---|---|
| The number of computing elements required for calculating a single sampling point | 16 | 10 |

(continued)

|  | DCT processor according to the invention | Processor by Lippen et al. |
| --- | --- | --- |
| The number of intermediate output values generated every cyde | 8 | 30 |
| The number of register files (storage devices for data) | 2 | 16 |
| Output latency | 40 cycles | 169 cycles |
| The estimated core area of DCT | 34 mm$^2$ | 18.4 mm$^2$ |

Here, 'the number of computing elements required for calculating a single sampling point' means the number of computing elements shown in Fig. 6, that is, the numbers of the adder-subtractors and the multipliers. According to the invention, they are provided for the DCT circuits 3, 3' eight each, thus 16 elements in total. Furthermore, 'the number of intermediate output values generated every cycle' is the number of values that can be generated at one calculation by the DOT circuit. According to the invention, 32 sampling points are calculated at four times, and thus it results in eight. Moreover, 'the number of register files (storage devices for data) means the number of devices for storing the calculated result. According to the invention, the FIFO 7 and the 8R/W memory circuit 5 make two devices. 'The estimated core area of DCT' is an area required for the DCT processor 1. 'Output latency' is mean time until the output result is obtained.

As apparent from the table above, for the area required for the peripheral logic of the memory blocks, for example, it is sufficient to the DCT processor 1 according to the invention to have about a half of the area required for the processor by Lippen's algorithm. Furthermore, as for output latency (delay), it is enough to the DCT processor according to the invention to have about one-fourth of output latency required for Lippen' s processor. As described above, the DCT processor according to the invention exerts excellent performance.

Finally, in the embodiments above, the cross units are used for sorting data from the FIFO, but it is fine to use the crossbar switches, for example. Furthermore, it is acceptable to dispose the cross units on the output units of the FIFO and the input units of the 8R/W memory circuit (inside the 8R/W memory circuit). The only requirement is that sorts must be done before write in the memory blocks of the 8R/W memory circuit so as to perform permutations by the 8R/W memory circuit.

According to the invention, the 8R/W memory circuit facilitates resource sharing, and thus the complexity of signal permutations (replacement) is eliminated to intend reductions in the number of members required, function block areas, and power consumption, and further intend accelerated processing speed, or reduced output latency.

**Claims**

1. A DCT processor used for implementing discrete cosine transform comprising:

   a storage processor for permutating data; and
   a computing device for computing in accordance with a given DCT algorithm,

   wherein data is looped at a given number of times between the storage processor and the computing device, and
   a result of discrete cosine transform is determined based on data read out of the computing device.

2. A DCT processor used for implementing discrete cosine transform comprising:

   the storage processor having a plurality of input units and a plurality of the output units, the storage processor for permutating a plurality of items of data inputted through the plurality of the input units and then outputting the data from the plurality of the output units;
   a computing device having a plurality of input units connected to the output units of the storage processor and a plurality of output units, the computing device for computing data inputted from the plurality of the input units in accordance with a given DCT algorithm and outputting the data from the plurality of the output units;
   a storage device having a plurality of input units connected to the output units of the computing device and a plurality of output units connected to the input units of the storage processor, the storage device for storing a plurality of items of data outputted from the output units of the computing device and outputting the data from the plurality of the output units; and

a sorting module disposed between the storage device and the storage processor, the sorting module for sorting data from the storage device in a given order,

wherein the plurality of items of data outputted from the output units of the storage device is looped at a given number of times by the storage processor, the computing device, the storage device, and the sorting module in this order, and

a result of discrete cosine transform is determined based on the data read out of the output unit of the storage device.

3. A 32-point DCT processor for performing discrete cosine transform with respect to 32 items of data obtained by being sampled at 32 sampling points comprising:

a storage processor having eight input units and eight output units, the storage processor for allowing eight items of data to be inputted and outputted each at one time, at four times in total, thus a total of 32 items of data, and the storage processor for outputting a total of 32 items of data that has been sequentially written at given storage locations eight items each at one time, at four times in total, to the eight output units in a given order through the eight input units;

two computing devices, each having four input units connected to four output units among the eight output units of the storage processor and four output units, the computing devices for computing data inputted from the eight input units by four items of data each at one time in accordance with a CGA-DCT algorithm and outputting the data from the four output units;

a storage device having eight input units connected to the eight output units in total of the two computing devices and eight output units connected to the eight input units in total of the storage processor, the storage device allowing eight items of data to be written in and read out each at one time, at four times in total, thus a total of 32 items of data by first-in, first-out, and the storage device for storing eight items of data in total outputted from the individual output units of the computing device at four times in total, thus a total of 32 items of data; and

a sorting module disposed between the storage device and the storage processor, the sorting module for sorting data from the storage device in a given order.

4. The DCT processor according to claim 3, further comprising an input module for inputting data from outside into the DCT processor which is disposed right before the storage processor.

5. The DCT processor according to claim 4,

wherein the storage processor operates in one of a first operating mode that association between the data to be inputted and the data to be outputted is not changed when the data is written in the given storage location, and a second operating mode that association between the data to be inputted and the data to be outputted is changed, and

data from the input module is processed in the first operating mode.

6. The DCT processor according to claim 5,

wherein a total of 32 items of data having been processed by the storage processor operating in the first operating mode is sequentially processed by the computing device and the storage device,

after that, a total of 32 items of data read out of the output units of the storage device is processed by the sorting module,

the data is then looped by the storage processor, the computing device, the storage device, and the sorting module operating in the second operating mode in this order, and

a result of the data having undergone discrete cosine transform is determined based on the data read out of the output units of the storage device at the fourth loop.

7. The DCT processor according to claim 3, further comprising an input module for inputting data from outside into the DCT processor which is disposed between the storage processor and the computing device.

8. The DCT processor according to claim 3, further comprising an input module for inputting data from outside into the DCT processor which is disposed between the computing device and the storage device.

9. The DCT processor according to claim 3,

wherein the storage processor has a total of 32 storage locations, and the 32 items of data are written in and read out of any one of 32 storage locations one by one.

10. The DCT processor according to claim 9,
wherein a write line and a read line are disposed at each of the 32 storage locations,
wherein the write line and the read line are vertically connected to each other, and are not shared in data write and readout.

11. The DCT processor according to any one of claims 3 to 10,
wherein the given sort is done by crossing transmission lines between the storage device and the storage processor.

12. The DCT processor according to any one of claims 3 to 11,
wherein a sorting device is used for outputting a total of 32 items of data to the eight output units in a given order.

13. The DCT processor according to any one of claims 3 to 12,
wherein the storage processor is an 8R/W memory circuit, the computing device is a DCT circuit, and the storage device is a FIFO.

14. The DCT processor according to any one of claims 3 to 13,
wherein the sorting module is disposed on the storage processor.

15. A storage processor used for a DCT processor used for implementing discrete cosine transform, the storage processor comprising:

looping data at a given number of times with a computing device for computing in accordance with a given DCT algorithm; and
permutating data so as to determine a result of discrete cosine transform based on data read out of the computing device.

16. A storage processor used for a DCT processor used for implementing discrete cosine transform, the storage processor comprising:

a plurality of input units; and
a plurality of output units,

wherein a plurality of items of data inputted through the plurality of the input units is permutated and is outputted from the plurality of the output units,
wherein the DCT processor further comprises:

a computing device having a plurality of input units connected to the output units of the storage processor and a plurality of the output units, the computing device for computing data inputted from the plurality of the input units in accordance with a given DCT algorithm and outputting the data from the plurality of the output units;
a storage device having a plurality of input units connected to the output units of the computing device and a plurality of output units connected to the input units of the storage processor, the storage device for storing a plurality of items of data outputted from the output units of the computing device and outputting the data from the plurality of the output units; and
a sorting module disposed between the storage device and the storage processor, the sorting module for sorting data from the storage device in a given order,

wherein a plurality of items of data outputted from the storage device is looped at a given number of times by the storage processor, the computing device, the storage device, and the sorting module in this order, and
a result of discrete cosine transform is determined based on data read out of the output units of the storage device.

17. A storage processor used for a 32-point DCT processor for performing discrete cosine transform with respect to 32 items of data obtained by being sampled at 32 sampling points, the storage processor comprising:

eight input units; and
eight output units,

wherein the storage processor allows eight items of data to be inputted and outputted each at one time at four times in total, thus a total of 32 items of data, and sequentially outputs a total of 32 items of data that has been sequentially written at given storage locations eight items each at one time, at four times in total, to the eight output units in a given order through the eight input units,
wherein the DCT processor further comprises:

two computing devices, each having four input units connected to four output units among the eight output units of the storage processor and four output units, the computing devices for computing data inputted from the eight input units by four items of data each at one time in accordance with a CGA-DCT algorithm and outputting the data from the four output units;
a storage device having eight input units connected to the eight output units in total of the two computing devices and eight output units connected to the eight input units in total of the storage processor, the storage device allowing eight items of data to be written in and read out each at one time, at four times in total, thus a total of 32 items of data by first-in, first-out, and the storage device for storing eight items of data in total outputted from the individual output units of the computing device at four times in total, thus a total of 32 items of data; and
a sorting module disposed between the storage device and the storage processor, the sorting module for sorting data from the storage device in a given order.

# FIG.1

EP 1 538 532 A1

# FIG.2

(a)

MODE 0

(b)

MODE 1

(c)

MODE 2

FIG.3

FIG.4

# FIG.5

MEMORY
BLOCK

| | | |
|---|---|---|
| [0] | [0] | 0 |
| [1] | [2] | 1 |
| [2] | [4] | 2 |
| [3] | [6] | 3 |
| [4] | [8] | 4 |
| [5] | [10] | 5 |
| [6] | [12] | 6 |
| [7] | [14] | 7 |
| [8] | [16] | 8 |
| [9] | [18] | 9 |
| [10] | [20] | 10 |
| [11] | [22] | 11 |
| [12] | [24] | 12 |
| [13] | [26] | 13 |
| [14] | [28] | 14 |
| [15] | [30] | 15 |
| [16] | [1] | 16 |
| [17] | [3] | 17 |
| [18] | [5] | 18 |
| [19] | [7] | 19 |
| [20] | [9] | 20 |
| [21] | [11] | 21 |
| [22] | [13] | 22 |
| [23] | [15] | 23 |
| [24] | [17] | 24 |
| [25] | [19] | 25 |
| [26] | [21] | 26 |
| [27] | [23] | 27 |
| [28] | [25] | 28 |
| [29] | [27] | 29 |
| [30] | [29] | 30 |
| [31] | [31] | 31 |

# FIG.6

START

SAMPLING — ST1

SORTING — ST2

PROCESSING BY THE 8R/W MEMORY CIRCUIT IN THE FIRST OPERATING MODE — ST3

PROCESSING BY THE DCT CIRCUITS — ST4

PROCESSING BY THE FIFO — ST5

SORTING BY THE CROSS UNITS — ST6

4 TIMES

PROCESSING BY THE 8R/W MEMORY CIRCUIT IN THE SECOND OPERATING MODE — ST7

PROCESSING BY THE DCT CIRCUITS — ST8

PROCESSING BY THE FIFO — ST9

SORTING BY THE CROSS UNITS — ST10

SORTING AND MULTIPLICATION — ST11

END

# FIG.7

EP 1 538 532 A1

EP 1 538 532 A1

**INTERNATIONAL SEARCH REPORT**

| International application No. |
| --- |
| PCT/JP03/08222 |

A. CLASSIFICATION OF SUBJECT MATTER
    Int.Cl⁷  G06F17/14, H03M7/30

According to International Patent Classification (IPC) or to both national classification and IPC

B. FIELDS SEARCHED

Minimum documentation searched (classification system followed by classification symbols)
    Int.Cl⁷  G06F17/00-17/18, H03M7/00-7/50

Documentation searched other than minimum documentation to the extent that such documents are included in the fields searched
    Jitsuyo Shinan Koho        1922-1996    Toroku Jitsuyo Shinan Koho    1994-2003
    Kokai Jitsuyo Shinan Koho  1971-2003    Jitsuyo Shinan Toroku Koho    1996-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 7-239842 A  (Hoabantientsugufu'un'yushenkonshi),<br>12 September, 1995 (12.09.95),<br>Par. Nos. [0010] to [0020]; Fig. 1<br>(Family: none) | 1,2,15,16<br>3-14,17 |
| Y | Astola J. et al., Architecture-Oriented Regular<br>Algorithms for Discrete Sine and Cosine Transforms.<br>In: IEEE, Transactions on Signal Processing, IEEE,<br>1999, Vol.47, No.4, pages 1109 to 1124 | 3-14,17 |
| A | JP 10-49518 A  (Sony Corp.),<br>20 February, 1998 (20.02.98),<br>Par. Nos. [0009] to [0020]; Figs. 19, 20<br>& EP 827087 A2        & US 6058409 A | 1-17 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    18 September, 2003 (18.09.03) | Date of mailing of the international search report<br>    30 September, 2003 (30.09.03) |
| --- | --- |
| Name and mailing address of the ISA/<br>    Japanese Patent Office | Authorized officer |
| Facsimile No. | Telephone No. |

Form PCT/ISA/210 (second sheet) (July 1998)

23

## INTERNATIONAL SEARCH REPORT

| | International application No. |
|---|---|
| | PCT/JP03/08222 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 6-332932 A  (Fujitsu Ltd.),<br>02 December, 1994 (02.12.94),<br>Full text; all drawings<br>(Family: none) | 1-17 |
| A | JP 2002-117015 A  (Takuro SATO),<br>19 April, 2002 (19.04.02),<br>Par. Nos. [0014] to [0023]; Figs. 1 to 11<br>(Family: none) | 1-17 |

Form PCT/ISA/210 (continuation of second sheet) (July 1998)